# EUROPÄISCHE PATENTSCHRIFT

(11) **EP 2 378 251 B1**
(45) Veröffentlichungstag und Bekanntmachung des Hinweises auf die Patenterteilung: **14.10.2015**
(21) Anmeldenummer: 11152048.2
(22) Anmeldetag: 25.01.2011
(51) Int. Cl.: G01D 3/028, F01M 11/02, F01M 9/00, F16C 3/14, F16C 3/02, F16C 33/66

(54) **Baueinheit für eine Winkelmesseinrichtung**
Component for an angle measuring device
Composant pour un dispositif de mesure d'angle

(30) Priorität: 19.04.2010 DE 102010027900
(43) Veröffentlichungstag der Anmeldung: 19.10.2011
(73) Patentinhaber: Dr. Johannes Heidenhain GmbH, 83301 Traunreut (DE)
(72) Erfinder: Meyer, Hermann, 83458, Schneizlreuth (DE)

(56) Entgegenhaltungen:
- EP-A2- 2 052 946
- DE-A1- 19 959 498
- DE-A1-102008 009 908
- US-A1- 2006 239 598

## Beschreibung

Die Erfindung betrifft eine Baueinheit für eine Winkelmesseinrichtung gemäß dem Patentanspruch 1.

Winkelmesseinrichtungen, häufig auch Drehgeber genannt, dienen zur Messung von Drehbewegungen eines drehbar gelagerten Maschinenteils, insbesondere einer Welle, über eine oder mehrere Umdrehungen. Die Drehbewegung wird dabei inkremental oder absolut erfasst. In Verbindung mit Zahnstangen und Zahnrädern oder mit Gewindespindeln lassen sich mit einer Winkelmesseinrichtung auch lineare Bewegungen messen. Häufig werden derartige Winkelmesseinrichtungen in Verbindung mit Elektromotoren zur Erzeugung eines Kommutierungssignals verwendet.

In der Regel weisen derartige Winkelmesseinrichtungen eine Baueinheit auf, die eine Welle mit einer Maßverkörperung und ein Wälzlager umfassen. Winkelmesseinrichtungen die vergleichsweise hohe Anforderungen bezüglich der Messgenauigkeit erfüllen müssen, arbeiten häufig nach einem optischen Messprinzip, wobei dann oft die Maßverkörperung beispielsweise als ein Glasring mit einer darauf aufgebrachten Winkelskalierung ausgestaltet ist. Die Winkelskalierung wird in diesem Fall durch ein Auflicht- oder ein Durchlichtverfahren abgetastet. Um eine hohe Messgenauigkeit zu gewährleisten ist es wichtig, dass die Maßverkörperung vor Verunreinigungen geschützt ist. Besonders nachteilig kann es sein, wenn Schmiermittel oder Bestandteile davon aus dem Wälzlager austreten und sich auf der Maßverkörperung, insbesondere im Bereich der Winkelskalierung niederschlagen. Derartige Verunreinigungen sind häufig als Tröpfchen ausgebildet und entfalten eine optische Wirkung, ähnlich einer Linse. Entsprechend werden unter solchen Umständen die Lichtstrahlen abgelenkt, was zu einer Fehlmessung führen kann.

Aus der JP 2001-289668 A ist eine Baueinheit für eine Winkelmesseinrichtung bekannt, die eine Welle aufweist, an welcher ein gesonderter Anbaukörper montiert ist. Am Anbaukörper ist eine Maßverkörperung befestigt. Zur Ableitung von Schmiermittel ist zwischen dem Anbaukörper und der Welle ein Kanal vorgesehen.

Eine derartige Baueinheit hat den Nachteil, dass diese im Allgemeinen vergleichsweise große Messfehler mit sich bringt. Denn es besteht dort einerseits die Gefahr, dass die Maßverkörperung nicht ausreichend genau bezüglich der Drehachse zentriert ist und zudem Taumelfehler auftreten. Weiterhin kann in einer Anordnung gemäß dem Stand der Technik Schmiermittel aus dem Kanal wieder austreten oder Flüssigkeiten aus dem inneren der hohlen Welle über den Kanal auf die Maßverkörperung gelangen.

Der Erfindung liegt die Aufgabe zugrunde, eine Baueinheit für eine Winkelmesseinrichtung zu schaffen, durch die eine hohe Messgenauigkeit zuverlässig und dauerhaft erreichbar ist.

Diese Aufgabe wird erfindungsgemäß durch die Schaffung einer Baueinheit für eine Winkelmesseinrichtung mit den Merkmalen des Patentanspruchs 1 gelöst.

Demnach umfasst die Baueinheit eine Welle mit einer Maßverkörperung zur Messung einer Drehbewegung um eine Achse und ein Wälzlager. Dabei weist die Welle als integralen Bestandteil einen Absatz auf, an dem das Wälzlager in axialem Anschlag montiert ist. Der Absatz und die Welle sind also einteilig ausgestaltet. Zwischen dem Absatz und dem Wälzlager ist zumindest eine Rille angeordnet, welche mit einer radialen Richtungskomponente orientiert ist und mit einem Hohlraum verbunden ist, der zur Aufnahme von Schmiermittel geeignet ist. Dabei ist der Hohlraum in Radialrichtung durch einen Ring des Wälzlagers und durch die Welle begrenzt, somit ist also die radiale Ausdehnung des Hohlraums durch die Oberflächen des Rings und der Welle begrenzt. Die Orientierung der zumindest einen Rille mit einer radialen Richtungskomponente umfasst beispielsweise eine streng radiale Orientierung oder einen Verlauf entsprechend einem Spiralensegment.

Die Messung einer Drehbewegung umfasst beispielsweise die Bestimmung einer vorliegenden Drehstellung oder Drehgeschwindigkeit. Als Ring des Wälzlagers kann insbesondere der Innenring gesehen werden. Weiterhin kann im Folgenden als Schmiermittel ein Schmiermittel, das im Betrieb der Winkelmesseinrichtung benutzt wird gesehen werden, insbesondere das Schmiermittel im Wälzlager oder auch nur Bestandteile davon, beispielsweise ein Öl.

Die Baueinheit ist vorteilhafterweise so konfiguriert, dass der Ring eine Anschlagfläche des Absatzes berührt, wobei die zumindest eine Rille an die Anschlagfläche angrenzt. Die Anschlagfläche kann aus mehreren Ringsegmenten bestehen, zwischen welchen die Rillen angeordnet sind. Vorzugsweise ist die Anschlagfläche oder sind die Anschlagflächen eben ausgestaltet und können zudem in einer Ebene angeordnet sein, die von der Achse orthogonal geschnitten wird.

Alternativ kann die zumindest eine Rille in einem separaten Zwischenstück, beispielsweise einem Zwischenring, eingearbeitet sein, welches zwischen dem Absatz und dem Ring des Wälzlagers angeordnet ist. Es ist dabei vorteilhaft im Hinblick auf die erreichbare Messgenauigkeit, wenn das Wälzlager und die Maßverkörperung unmittelbar, ohne Zwischenstücke, an der einteiligen Welle befestigt sind.

Mit Vorteil sind die Anschlagfläche und der Ring so bearbeitet, dass derjenige Abschnitt, in welchem die Anschlagfläche den Ring berührt, insbesondere für das Schmiermittel, dichtend wirkt. Auf diese Weise ist es möglich auf zusätzliche Fügespalte oder Dichtungen zu verzichten, was zu einer präziseren baulichen Ausgestaltung der Baueinheit führt und im Ergebnis die Messfehler der entsprechenden Winkelmesseinrichtung minimiert.

Vorzugsweise ist der Hohlraum als eine Ausnehmung in der Welle hergestellt. Somit kann der Ring des Wälzlagers eine glatte Oberfläche aufweisen, die passgenau mit den entsprechenden, der Ausnehmung benachbarten, Passflächen der Welle zusammengefügt werden kann. Auch aus dieser Maßnahme resultiert eine hohe Messgenauigkeit, da Exzentrizitäts- und Taumelfehler konstruktionsbedingt minimiert werden.

Mit Vorteil erstreckt sich der Hohlraum entlang des vollen Umfangs oder entlang eines Teilumfangs der Welle. Weiterhin kann der Hohlraum einen wendelförmigen Raum umfassen, der sich auch über einen Umfangswinkel von mehr als 360° erstecken kann.

In weiterer Ausgestaltung der Erfindung kann das Wälzlager eine Dichtung umfassen, wobei der Ring des Wälzlagers, welcher gleichzeitig eine begrenzende Wand für den Hohlraum aufweist, relativ zur Dichtung drehbar ist.

Mit Vorteil ist die Baueinheit so konfiguriert, dass, bezogen auf die Axialrichtung, der Absatz zwischen der Maßverkörperung und dem Lager angeordnet ist. Entsprechend weist die einteilige Welle in demjenigen Abschnitt, welcher mit dem Innenring des Wälzlagers in Kontakt ist, einen kleineren Durchmesser auf als im Bereich der Anschlagfläche. Weiterhin ist der Durchmesser der Welle in einem Abschnitt, an welchem die Maßverkörperung befestigt ist größer als der Durchmesser im Bereich der Anschlagfläche.

Gemäß einer Weiterbildung der Erfindung kann die Baueinheit einen Spalt zur Hinleitung des Schmiermittels, insbesondere in Umfangsrichtung, an die Rille aufweisen. Der Spalt ist dabei durch Wandungen begrenzt, die rechtwinklig oder in einem spitzen Winkel, also einem Winkel von kleiner oder gleich 90°, orientiert sind. Zudem kann die Baueinheit einen weiteren Spalt zur Ableitung des Schmiermittels aus der Rille aufweisen, wobei dieser weitere Spalt durch Wandungen begrenzt ist, die rechtwinklig oder in einem spitzen Winkel zueinander orientiert sind. Die Ableitung des Schmiermittels aus der Rille kann insbesondere in Umfangsrichtung erfolgen, wobei bei weiterem Nachfolgen von Schmiermittel auch eine axial nach innen gerichtete Bewegung des Schmiermittels eintritt. Zur Optimierung der Weiterleitung des Schmiermittels kann insbesondere der Winkel des ersten Spalts größer gleich dem Winkel des weiteren Spaltes sein, insbesondere größer als der Winkel des weiteren Spaltes sein.

Vorzugsweise kann außerdem die zumindest eine Rille an eine Anschlagfläche des Absatzes angrenzen und die Innenfläche der Rille mit der Anschlagfläche einen Winkel bilden, der kleiner oder gleich 90° ist.

Die Baueinheit kann so ausgestaltet sein, dass sich die Rille in Radialrichtung nach außen über den inneren Umfang des Rings erstreckt. Beispielsweise kann bei einer derartigen Anordnung der Spalt zur Hinleitung des Schmiermittels an die Rille durch Wandungen begrenzt sein, die nicht in einem spitzen Winkel orientiert sind.

Weitere vorteilhafte Ausgestaltungen der Erfindung sind den abhängigen Ansprüchen zu entnehmen.

Weitere Merkmale und Vorteile der Erfindung werden bei der nachfolgenden Beschreibung eines Ausführungsbeispiels anhand der Figuren deutlich werden.

Es zeigen die:
- Figur 1: eine Längsschnittdarstellung einer Winkelmesseinrichtung,
- Figur 2: eine Detailansicht der Baueinheit mit einer Welle und einem Lager im Längsschnitt,
- Figur 3a: eine Schnittdarstellung einer Rille zur Weiterleitung von Schmiermittel,

- Figur 3b: eine Seitenansicht der Rille zur Weiterleitung von Schmiermittel,

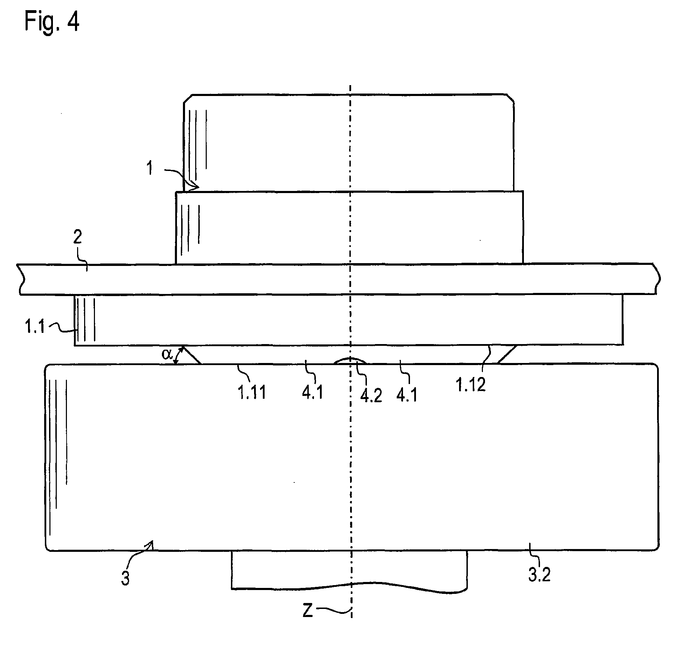

- Figur 4: eine Seitenansicht der Baueinheit,
- Figur 5: eine Draufsicht auf die Welle der Baueinheit.

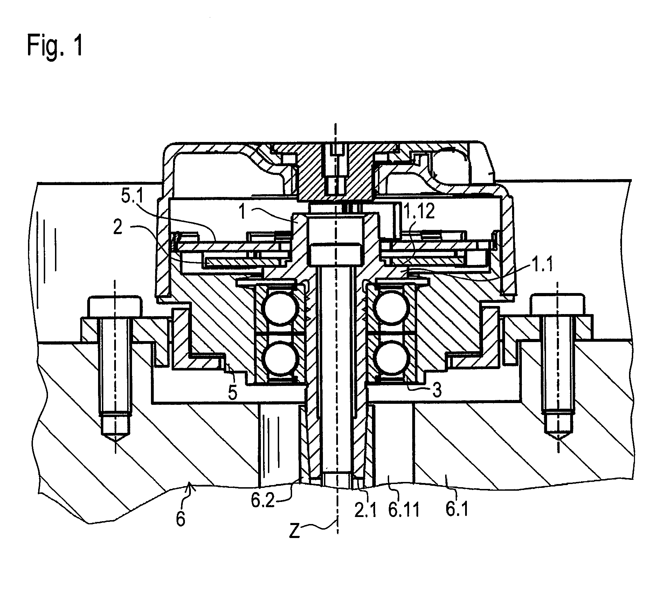

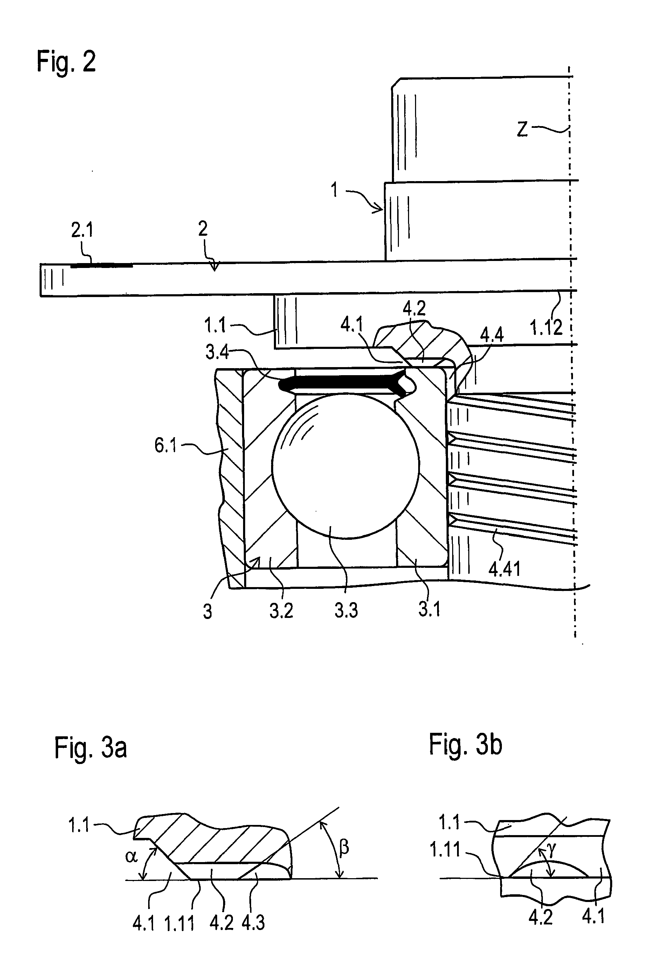

Die in der Figur 1 in einer mittigen Längsschnittdarstellung dargestellte Winkelmesseinrichtung umfasst einen Stator und einen Rotor. Der Rotor weist eine einstückige Welle 1 mit einem Absatz 1.1 auf, der mit Hilfe einer Drehbearbeitung aus einen monolithischen Halbzeug spanend herausgearbeitet ist. Der Absatz 1.1 weist eine orthogonal zur Achse Z orientierte Fügefläche 1.12 auf (siehe auch Figur 2). An dieser ist eine Maßverkörperung 2 durch eine Klebung fest und nur mit geringen Toleranzabweichungen zentrisch bezüglich der Achse Z verbunden. Die Maßverkörperung 2, auf welcher eine Winkelskalierung 2.1 aufgebracht ist, ist aus Glas und ringförmig ausgestaltet, wobei die Maßverkörperung 2 mit hoher Präzision im Hinblick auf ihre Maßgenauigkeit und Planarität gefertigt ist. In der Figur 2 ist die Winkelskalierung 2.1 angedeutet, wobei diese beispielsweise als eine inkrementale Teilung mit radial orientierten Skalenstrichen oder als ein absoluter Code ausgestaltet sein kann. Die Welle 1 ist innerhalb eines Körpers 5, der dem Stator zuzuordnen ist, durch ein Lager, hier zwei Wälzlager 3, drehbar gelagert. Die Maßverkörperung 2 bzw. deren Winkelskalierung 2.1 wird im gezeigten Beispiel lichtelektrisch von einer Abtasteinrichtung 5.1, welche am Körper 5 befestigt ist, abgetastet. Entsprechende lichtempfindliche Detektoren befinden sich auf der als Leiterplatte ausgestalteten Abtasteinrichtung 5.1. Unter anderem sind auf der Leiterplatte bzw. an der Abtasteinrichtung 5.1 überdies elektrische Bauelemente zur Signalformung - beispielsweise zur Verstärkung und Digitalisierung - der von den Detektoren gelieferten Abtastsignale angeordnet. Über ein in den Figuren nicht gezeigtes Anschlusskabel wird eine elektrische Verbindung zwischen der Winkelmesseinrichtung und einer Folgeelektronik hergestellt, so dass elektrische Signale und elektrische Energie zwischen der Folgeelektronik und der Winkelmesseinrichtung übertragen werden können.

Die Winkelmesseinrichtung ist zum Anbau an eine Maschine 6 bestimmt. Zur Aufnahme der Winkelmesseinrichtung ist an einem statorseitigen Maschinenteil 6.1 eine gestufte hohlzylindrische Ausnehmung 6.11 vorgesehen, in die zentral eine rotorseitige Motorwelle 6.2 ragt. Daneben ist die Welle 1 zum drehfesten Anschluss an ein zu messendes Bauelement, etwa an einer Motorwelle, 6.2 ausgebildet. Die Verbindung zwischen der Welle 1 der Winkelmesseinrichtung und der Motorwelle 6.2 wird beispielsweise mit einem durch die Welle 1 ragenden Verbindungsmittel in Form einer Befestigungsschraube realisiert, wobei zu diesem Zweck das Ende der Welle 1 konisch ausgestaltet ist. Bestimmungsgemäß wird folglich die Motorwelle 6.2 starr mit der Welle 1 der Winkelmesseinrichtung verbunden.

Durch die Winkelmesseinrichtung kann also die relative Winkelstellung zwischen dem Stator und dem Rotor bestimmt werden. Derartige Winkelmesseinrichtungen werden auch häufig als Drehgeber bezeichnet.

In der Figur 2 ist eine Baueinheit der Winkelmesseinrichtung, umfassend die Welle 1, die Maßverkörperung 2 und eines der Wälzlager 3 im Detail dargestellt. Das Wälzlager 3 weist einen Innenring 3.1, einen Außenring 3.2 sowie Wälzkörper 3.3 auf. Für einen einwandfreien Betrieb ist es erforderlich, dass das Wälzlager 3 geschmiert ist, weshalb zwischen dem Innenring 3.1 und dem Außenring 3.2 Schmiermittel, bzw. Schmierfett vorgesehen ist. Eine ringförmige Dichtung 3.4 soll im Grunde dazu dienen, dass das Schmiermittel, bzw. Schmierfett im Wälzlager 3 verbleibt und nicht in Richtung der optisch abtastbaren Maßverkörperung 2 wandert. Die Dichtung 3.4 ist mit dem Außenring 3.2 fest verbunden, so dass im Betrieb der Winkelmesseinrichtung keine Relativbewegung zwischen der Dichtung 3.4 und dem Außenring 3.2 stattfindet. Dagegen schleifen Dichtlippen der Dichtung 3.4 am Innenring 3.1, wenn eine Drehbewegung des Wälzlagers 3 vorliegt.

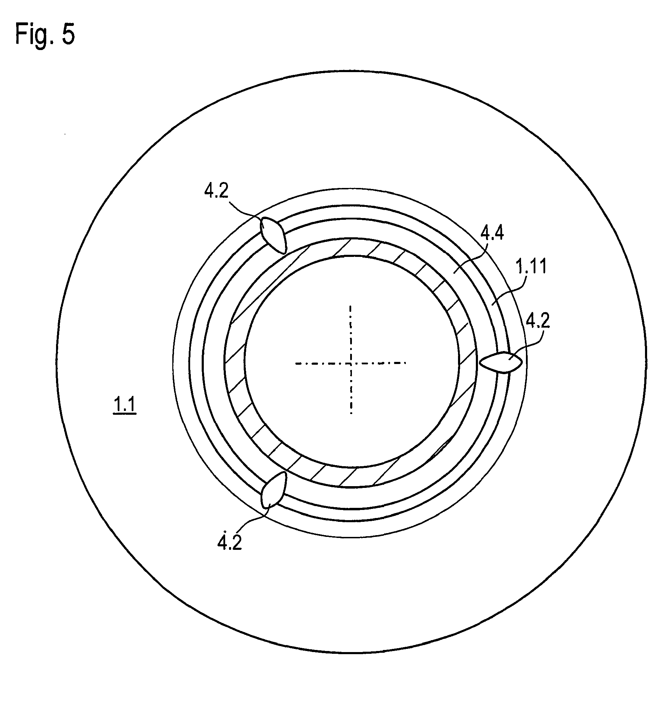

Die Welle 1, insbesondere der Absatz 1.1, weist gemäß den Figuren 2, 3a, 3b und 5 eine Anschlagfläche 1.11 auf, die mit dem Innenring 3.1 in Berührkontakt steht. Gemäß der Figur 5 wird die Anschlagfläche 1.11 durch drei Rillen 4.2 unterbrochen, die um 120° versetzt entlang des Umfangs angeordnet sind, so dass also jede der Rillen 4.2 an die Anschlagfläche 1.11 angrenzt. Die Anschlagfläche 1.11 ist orthogonal zur Achse Z orientiert. Folglich sind im vorgestellten Ausführungsbeispiel die Anschlagfläche 1.11 und die Fügefläche 1.12 des Absatzes 1.1 parallel zueinander orientiert. Diese Parallelität kann mit großer Genauigkeit hergestellt werden, weil sowohl die Anschlagfläche 1.11 als auch die Fügefläche 1.12 in einem Bearbeitungsschritt während des spanabhebenden Prozesses der Herstellung der monolithischen Welle erzeugt werden. Diese Bauweise führt letztlich zu einer Erhöhung der Messgenauigkeit der Winkelmesseinrichtung, da Taumelfehlbewegungen der Maßverkörperung 2 auf ein Minimum reduziert werden.

Beispielsweise durch Erwärmung während des Betriebs der Winkelmesseinrichtung kann es vorkommen, dass Schmiermittel oder Bestandteile des Schmiermittels, bzw. Schmierfetts aus dem Wälzlager 3, insbesondere im Bereich der Dichtlippen austreten. Um Messfehler zu vermeiden, muss dafür gesorgt werden, dass das austretende Schmiermittel nicht auf die Maßverkörperung 2 gelangt und somit die optischen Eigenschaften der Winkelskalierung 2.1 stört. In der einteiligen Welle 1 sind zu diesem Zweck Ausnehmungen eingearbeitet, welche einen Kapillarkanal bilden. Dagegen ist im vorgestellten Ausführungsbeispiel der Innenring 3.1 des Wälzlagers 3 nicht in der Weise bearbeitet, dass dieser Kanäle zur Aufnahme von Schmiermittel aufweisen würde.

Das ausgetretene Schmiermittel wird zunächst durch Kapillarkräfte in einem Spalt 4.1 gefangen, welcher durch Wandungen des Innenrings 3.1 und des Absatzes 1.1 begrenzt wird und in unmittelbarer Nähe zu den Dichtlippen des Dichtrings 3.4 angeordnet ist. Aufgrund der konischen Form des Absatzes 1.1 im Grenzbereich zur Anschlagfläche 1.11 sind die betreffenden Wandungen in einem spitzen Winkel α, hier 45°, zueinander orientiert. Im Allgemeinen wird das Schmiermittel zwischen den Rillen 4.2 in den Spalt 4.1 gelangen. Bedingt durch Kapillarkräfte fließt das Schmiermittel entlang des Umfangs im Spalt 4.1 bis schließlich das Schmiermittel in eine Rille 4.2 eintritt, so dass also das Schmiermittel mit Hilfe des speziell ausgestalteten Spalts 4.1 zur Rille 4.2 hingeleitet wird. Jede Rille 4.2 ist zur verbesserten Aufnahmefähigkeit von Schmiermittel so ausgestaltet, dass deren Innenfläche mit der Anschlagfläche 1.11 an der Kante, an welcher die Innenfläche mit der Anschlagfläche 1.11 zusammentrift, einen Winkel γ bildet, der im vorliegenden Ausführungsbeispiel 45° beträgt. Durch diesen spitzen Winkel werden die Kapillarkräfte erhöht, so dass das Schmiermittel in die Rillen 4.2 hineingezogen wird. Die Anschlagfläche 1.11, wie auch derjenige stirnseitige Abschnitt des Innenrings 3.1, welcher die Anschlagfläche 1.11 berührt, sind durch einen Schleifprozess so exakt bearbeitet, dass der betreffende Abschnitt, dichtend wirkt, so dass hier kein Schmiermittel radial die Anschlagfläche 1.11 passieren kann.

Am radial innen liegenden Ende der Rillen 4.2 gelangt das überschüssige Schmiermittel in einen weiteren Spalt 4.3, welcher durch die Wandung des Innenrings 3.1 und die Wandung der Welle 1 in Form eines Freistichs, begrenzt wird, unter Einschließung eines weiteren spitzen Winkels β. Im gezeigten Ausführungsbeispiel beträgt dieser Winkel β 30°. Im Übrigen ist festzuhalten, dass sich die Winkel α, β und γ auf die lichten Spaltwinkel zwischen den betreffenden Wandungen beziehen, also auf diejenigen Winkel beziehen, die relevant im Hinblick auf Kapillareffekte sind. Es hat sich im Hinblick auf die Ableitung des Schmiermittels als vorteilhaft erwiesen, wenn der Winkel α größer oder gleich dem Winkel β ist. Insbesondere ist es vorteilhaft, wenn die Baueinheit so konfiguriert ist, dass zumindest eine der Beziehungen α ≥ β, α ≥ γ oder α ≥ γ ≥ β, insbesondere 90°≥ α ≥ γ ≥ β gilt.

Danach kriecht das Schmiermittel in radialer Richtung entlang der Stirnseite des Innenrings 3.1 innerhalb eines Spalts 4.3 zu einem Hohlraum 4.4, welcher sich entlang des Umfangs der Welle 1 erstreckt und zur Vergrößerung des Aufnahmevolumens zudem einen wendelförmigen Raum 4.41 umfasst. Somit ist also der Hohlraum 4.4 in Radialrichtung durch den Innenring 3.1 des Wälzlagers 3 und durch die Welle 1 begrenzt. Der Hohlraum 4.4 stellt dasjenige Volumen dar, in dem ausgetretenes Schmiermittel endgültig verbleibt, ohne dass die Messung gestört werden kann. Austretendes Schmiermittel strömt also, getrieben von Kapillarkräften, durch einen Kanal, welcher einen ersten Spalt 4.1, eine Rille 4.2, einen weiteren Spalt 4.3 und einen Hohlraum 4.4 umfasst. Dabei ist es wichtig, dass das Schmiermittel nicht wieder zurück in Richtung Maßverkörperung 2 kriecht. Dies wird durch die spezielle Konstruktion der Baueinheit verhindert. Denn zum einen wird der Hohlraum 4.4 einschließlich des wendelförmigen Raums 4.41 radial außen durch den Innenring 3.1 bzw. die konkave Mantelseite des Innenrings 3.1 begrenzt, so dass auch bei auftretenden Zentrifugalkräften, wenn die Welle 1 rotiert, kein Zurückkriechen des Schmiermittels erfolgt. Weiterhin ist durch die Dimensionierung der Winkel α und β (α ≥ β) gewährleistet, dass die Kapillarkräfte radial nach innen wirken. Im Übrigen besteht, abgesehen von den Rillen 4.2, keine Verbindung des Hohlraums 4.4 zur Umgebung, auch nicht in den hohlzylindrischen Innenraum der Welle 1, so dass nicht die Gefahr besteht, dass Flüssigkeiten bzw. Schmiermittel auf einem anderen Weg in den Hohlraum 4.4 gelangen und eine Ableitung bzw. Aufnahme von Schmiermittel aus dem relevanten Bereich der Maßverkörperung 2 unmöglich machen würden. Schließlich ist der oben genannte Kanal so ausgestaltet, dass die Kapillarkräfte über die ganze Länge des Kanals wirken, insbesondere dadurch, dass ausgehend vom ersten Spalt 4.1 über die Rille 4.2, den weiteren Spalt 4.3 und den Hohlraum 4.4 die wirksame Spaltbreite nicht zunimmt.

Somit kann durch die Verwendung der erfindungsgemäßen Baueinheit eine Winkelmesseinrichtung geschaffen werden, mit der eine hohe Messgenauigkeit erreichbar ist, da einerseits geringe Exzentrizitätsfehler und / oder Taumelfehler bei gleichzeitiger Vermeidung von Verunreinigungen der Maßverkörperung erreichbar sind.

## Patentansprüche

1. Baueinheit für eine Winkelmesseinrichtung umfassend eine Welle (1) mit einer Maßverkörperung (2) zur Messung einer Drehbewegung um eine Achse (Z), wobei die Welle (1) als integralen Bestandteil einen Absatz (1.1) aufweist, an dem ein Wälzlager (3) in axialem Anschlag montiert ist, wobei zwischen dem Absatz (1.1) der Welle (1) und dem Wälzlager (3) zumindest eine Rille (4.2) angeordnet ist, welche mit einer radialen Richtungskomponente orientiert und mit einem Hohlraum (4.4) zur Aufnahme von Schmiermittel verbunden ist, wobei das Wälzlager (3) einen Innenring (3.1), einen Außenring (3.2) sowie Wälzkörper (3.3) aufweist und der Hohlraum (4.4) in Radialrichtung durch den Innenring (3.1) und die Welle (1) begrenzt ist.

2. Baueinheit gemäß dem Anspruch 1, wobei der Innenring (3.1) eine Anschlagfläche (1.11) des Absatzes (1.1) berührt und die zumindest eine Rille (4.2) an die Anschlagfläche (1.11) angrenzt.

3. Baueinheit gemäß dem Anspruch 2, wobei die Anschlagfläche (1.11) und der Innenring (3.1) so bearbeitet sind, dass derjenige Abschnitt, in welchem die Anschlagfläche (1.11) den Innenring (3.1) berührt, dichtend wirkt.

4. Baueinheit gemäß einem der vorhergehenden Ansprüche, wobei der Hohlraum (4.4) als eine Ausnehmung in der Welle (1) hergestellt ist.

5. Baueinheit gemäß einem der vorhergehenden Ansprüche, wobei sich der Hohlraum (4.4) entlang des Umfangs der Welle (1) erstreckt.

6. Baueinheit gemäß dem Anspruch 5, wobei der Hohlraum (4.4) einen wendelförmigen Raum (4.41) umfasst.

7. Baueinheit gemäß einem der vorhergehenden Ansprüche, wobei das Wälzlager (3) eine Dichtung (3.4) umfasst und der Innenring (3.1) des Wälzlagers (3) relativ zur Dichtung (3.4) drehbar ist.

8. Baueinheit gemäß einem der vorhergehenden Ansprüche, wobei diese so konfiguriert ist, dass bezogen auf die Axialrichtung der Absatz (1.1) zwischen der Maßverkörperung (2) und dem Lager (3) angeordnet ist.

9. Baueinheit gemäß einem der vorhergehenden Ansprüche, wobei die Baueinheit einen Spalt (4.1) zur Hinleitung des Schmiermittels an die zumindest eine Rille (4.2) aufweist, wobei dieser Spalt (4.1) durch Wandungen begrenzt ist, die rechtwinklig oder in einem spitzen Winkel (α) zueinander orientiert sind.

10. Baueinheit gemäß einem der vorhergehenden Ansprüche, wobei die Baueinheit einen weiteren Spalt (4.3) zur Ableitung des Schmiermittels aus der zumindest einen Rille (4.2) aufweist, wobei dieser weitere Spalt (4.3) durch Wandungen begrenzt ist, die rechtwinklig oder in einem spitzen Winkel (β) zueinander orientiert sind.

11. Baueinheit gemäß dem Anspruch 9 und 10, wobei der Winkel (α) des Spalts (4.1) größer oder gleich dem Winkel (β) des weiteren Spaltes (4.3) ist.

12. Baueinheit gemäß einem der vorhergehenden Ansprüche, wobei die zumindest eine Rille (4.2) an eine Anschlagfläche (1.11) des Absatzes (1.1) angrenzt und die Innenfläche der Rille (4.2) mit der Anschlagfläche (1.11) einen Winkel (γ) bildet, der kleiner oder gleich 90° ist.

## Claims

1. Modular unit for an angle measuring device comprising a shaft (1) with a measuring scale (2) for measuring a rotational movement about an axis (Z), the shaft (1) having, as an integral constituent part, a shoulder (1.1), on which an anti-friction bearing (3) is mounted axially, at least one groove (4.2) being arranged between the shoulder (1.1) of the shaft (1) and the anti-friction bearing (3), which groove (4.2) is oriented with a radial directional component and is connected to a cavity (4.4) for receiving lubricant, the anti-friction bearing (3) having an inner ring (3.1), an outer ring (3.2) and rolling bodies (3.3), and the cavity (4.4) being delimited in the radial direction by the inner ring (3.1) and the shaft (1).

2. Modular unit according to Claim 1, the inner ring (3.1) being in contact with a stop face (1.11) of the shoulder (1.1), and the at least one groove (4.2) adjoining the stop face (1.11).

3. Modular unit according to Claim 2, the stop face (1.11) and the inner ring (3.1) being machined in such a way that that section, in which the stop face (1.11) makes contact with the inner ring (3.1), has a sealing action.

4. Modular unit according to one of the preceding claims, the cavity (4.4) being produced as a recess in the shaft (1).

5. Modular unit according to one of the preceding claims, the cavity (4.4) extending along the circumference of the shaft (1).

6. Modular unit according to Claim 5, the cavity (4.4) comprising a helical space (4.41).

7. Modular unit according to one of the preceding claims, the anti-friction bearing (3) comprising a seal (3.4), and the inner ring (3.1) of the anti-friction bearing (3) being rotatable relative to the seal (3.4).

8. Modular unit according to one of the preceding claims, it being configured in such a way that the shoulder (1.1) is arranged between the measuring scale (2) and the bearing (3) in relation to the axial direction.

9. Modular unit according to one of the preceding claims, the modular unit having a gap (4.1) for conducting the lubricant to the at least one groove (4.2), the said gap (4.1) being delimited by walls which are oriented at a right angle or at an acute angle (α) with respect to one another.

10. Modular unit according to one of the preceding claims, the modular unit having a further gap (4.3) for discharging the lubricant from the at least one groove (4.2), the said further gap (4.3) being delimited by walls which are oriented at a right angle or at an acute angle (β) with respect to one another.

11. Modular unit according to Claims 9 and 10, the angle (α) of the gap (4.1) being greater than or equal to the angle (β) of the further gap (4.3).

12. Modular unit according to one of the preceding claims, the at least one groove (4.2) adjoining a stop face (1.11) of the shoulder (1.1), and the inner face of the groove (4.2) forming an angle (γ) with the stop face (1.11), which angle (γ) is less than or equal to 90°.

## Revendications

1. Composant pour un dispositif de mesure d'angle, comprenant un arbre (1) avec une mesure matérialisée (2) pour la mesure d'un mouvement de rotation autour d'un axe (Z), l'arbre (1) présentant en tant que constituant intégré un épaulement (1.1) sur lequel est monté un palier à roulement (3) dans une butée axiale, entre l'épaulement (1.1) de l'arbre (1) et le palier à roulement (3) étant disposée au moins une gorge (4.2) qui est orientée avec une composante directionnelle radiale et qui est connectée à une cavité (4.4) pour recevoir du lubrifiant, le palier à roulement (3) présentant une bague intérieure (3.1), une bague extérieure (3.2) ainsi que les corps de roulement (3.3) et la cavité (4.4) étant limitée dans la direction radiale par la bague intérieure (3.1) et l'arbre (1).

2. Composant selon la revendication 1, dans lequel la bague intérieure (3.1) vient en contact avec une surface de butée (1.11) de l'épaulement (1.1) et l'au moins une gorge (4.2) est adjacente à la surface de butée (1.11).

3. Composant selon la revendication 2, dans lequel la surface de butée (1.11) et la bague intérieure (3.1) sont usinées de telle sorte que leur portion respective dans laquelle la surface de butée (1.11) vient en contact avec la bague intérieure (3.1) ait un effet d'étanchéité.

4. Composant selon l'une quelconque des revendications précédentes, dans laquelle la cavité (4.4) est réalisée sous forme d'évidement dans l'arbre (1).

5. Composant selon l'une quelconque des revendications précédentes, dans lequel la cavité (4.4) s'étend le long de la périphérie de l'arbre (1).

6. Composant selon la revendication 5, dans lequel la cavité (4.4) comprend un espace en forme d'hélice (4.41).

7. Composant selon l'une quelconque des revendications précédentes, dans lequel le palier à roulement (3) comprend un joint d'étanchéité (3.4) et la bague intérieure (3.1) du palier à roulement (3) peut tourner par rapport au joint d'étanchéité (3.4).

8. Composant selon l'une quelconque des revendications précédentes, dans lequel celui-ci est configuré de telle sorte que par rapport à la direction axiale, l'épaulement (1.1) soit disposé entre la mesure matérialisée (2) et le palier (3).

9. Composant selon l'une quelconque des revendications précédentes, dans lequel le composant présente une fente (4.1) pour l'introduction du lubrifiant au niveau de l'au moins une gorge (4.2), cette fente (4.1) étant limitée par des parois qui sont orientées à angle droit ou suivant un angle aigu (α) l'une par rapport à l'autre.

10. Composant selon l'une quelconque des revendications précédentes, dans lequel le composant présente une fente supplémentaire (4.3) pour prélever le lubrifiant de l'au moins une gorge (4.2), cette fente supplémentaire (4.3) étant limitée par des parois qui sont orientées à angle droit ou suivant un angle aigu (β) l'une par rapport à l'autre.

11. Composant selon les revendications 9 et 10, dans lequel l'angle (α) de la fente (4.1) est supérieur ou égal à l'angle (β) de la fente supplémentaire (4.3).

12. Composant selon l'une quelconque des revendications précédentes, dans lequel l'au moins une gorge (4.2) est adjacente à une surface de butée (1.11) de l'épaulement (1.1) et la surface intérieure de la gorge (4.2) forme avec la surface de butée (1.11) un angle (γ) qui est inférieur ou égal à 90°.
